# EUROPÄISCHE PATENTSCHRIFT

(11) **EP 3 131 727 B1**
(45) Veröffentlichungstag und Bekanntmachung des Hinweises auf die Patenterteilung: **23.12.2020**
(21) Anmeldenummer: 15720919.8
(22) Anmeldetag: 16.04.2015
(51) Int. Cl.: B29C 45/00, F16B 33/00, B29C 45/26, B29C 45/27, B29L 1/00, B29K 105/12

(54) **HOHLZYLINDRISCHES SCHRAUBTEIL MIT GEWINDEAUSNEHMUNG UND VERFAHREN ZU SEINER HERSTELLUNG**
HOLLOW CYLINDRICAL SCREW PART WITH RECESS IN ITS THREAD AND METHOD FOR PRODUCING THE SAME
VIS CYLINDRIQUE CREUSE AVEC RENFORCEMENT DANS SON FILETAGE ET SON PROCÉDÉ DE FABRICATION

(30) Priorität: 17.04.2014 DE 102014105584
(43) Veröffentlichungstag der Anmeldung: 22.02.2017
(73) Patentinhaber: Voss Automotive GmbH, 51688 Wipperfürth (DE)
(72) Erfinder: BERGER, Markus, 51688 Wipperfürth (DE); SIEPER, Günter, 42853 Remscheid (DE); OMMER, Michael, 51688 Wipperfürth (DE)
(74) Vertreter: Patent- und Rechtsanwälte Dr. Solf & Zapf
(86) Internationale Anmeldenummer: PCT/EP2015/058233
(87) Internationale Veröffentlichungsnummer: WO 2015/158805

(56) Entgegenhaltungen:
- WO-A1-2009/124994
- WO-A1-2009/124994
- WO-A1-2013/092234
- WO-A1-2013/092234
- DE-A1-102008 042 721
- DE-A1-102008 042 721
- DUPONT: "General Design Principles for DuPont Engineering Polymers (Design guide - Module I)", INTERNET CITATION, 2000, Seite complete, XP007904729, Gefunden im Internet: URL:http://plastics.dupont.com/plastics/pd flit/americas/general/H76838.pdf [gefunden am 2008-05-16]
- DUPONT: "General Design Principles for DuPont Engineering Polymers (Design guide - Module I)", INTERNET CITATION, 1 January 2000 (2000-01-01), page complete, XP007904729, Retrieved from the Internet: URL:http://plastics.dupont.com/plastics/pd flit/americas/general/H76838.pdf [retrieved on 1077-01-01]

## Beschreibung

Die vorliegende Erfindung betrifft ein Schraubteil mit ringförmigem Querschnitt, wie eine Schraube, eine Mutter, ein Muffenteil, einen Rohrstecker, einen Rohrverbinder oder dergleichen, welches einen hohlzylindrischen Grundkörper mit einem Innenkanal aufweist, der von einer Wand des Grundkörpers umgeben ist, die ein Gewinde aufweist, wobei der Grundkörper durch ein radiales Einspritzen einer Fasern enthaltenden plastifizierten polymeren Masse in eine Kavität eines Formwerkzeugs durch mindestens eine Einspritzöffnung des Formwerkzeugs und durch eine anschließende Entformung aus dem Werkzeug nach einem Erstarren der polymeren Masse hergestellt ist, wobei ein Anguss entfernt wird, so dass der Grundkörper mindestens eine Anspritzstelle aufweist.

Bei dem Gewinde kann es sich dabei insbesondere um ein Außengewinde auf dem Grundkörper handeln, wobei das radiale Einspritzen der Fasern enthaltenden plastifizierten polymeren Masse aus dem Innenkanal heraus erfolgt, so dass der Grundkörper in dem Innenkanal mindestens eine Anspritzstelle aufweist.

Des Weiteren betrifft die vorliegende Erfindung ein Verfahren zur Herstellung eines derartigen Formteils.

Aus der DE 10 2008 042 721 A1 ist ein insbesondere in einem Druckguss- oder Spritzgussverfahren herstellbares, aus Kunststoff oder vorzugsweise aus Metall bestehendes Sensorgehäuse mit einem Grundkörper und zwei von dem Grundkörper abstehenden Rohrabschnitten bekannt. Von den Rohrabschnitten trägt wenigstens ein erster ein Außengewinde, das in Umfangsrichtung durch wenigstens eine ausgesparte Facette unterbrochen ist. Zur Herstellung eines derartigen Gehäuses werden wenigstens zwei Formwerkzeuge benötigt, die gemeinsam das Außengewinde des Rohrabschnitts abformen. Wenn diese gleichzeitig die an die Facetten angrenzenden Seitenwände des Grundkörpers mit den Durchgängen abformen sollen, müssen sie in einer zu den Facetten senkrechten bzw. zu den Durchgängen parallelen Richtung gegeneinander beweglich sein. Die Folge hiervon ist, dass jede der zwei Formen jeweils eine Hälfte eines sich zwischen zwei Facetten erstreckenden Abschnitts des Außengewindes abformt. Die Formen müssen daher sehr exakt aufeinander abgestimmt sein, um zu verhindern, dass an den Gewindeabschnitten jeweils der Grenze zwischen den zwei Formen entsprechende Formgrate gebildet werden, die die Funktion des Gewindes beeinträchtigen. Die Formgrate können nicht nur das Gewinde schwergängig machen, sie führen auch dazu, dass die Spannkraft einer aufgeschraubten Mutter nicht über den Umfang des Gewindes verteilt, sondern punktuell am Formgrat in den Rohrabschnitt eingeleitet wird. Um bei trotz eventuellem Vorhandensein von Formgraten am Rohrabschnitt eine gleichmäßige, über den gesamten Umfang des Gewindes verteilte Krafteinleitung zu ermöglichen, wird u. a. vorgesehen, dass sich die Facette von einer zur Längsachse des zweiten Rohrabschnitts parallelen Mittelebene des ersten Rohrabschnitts aus auf wenigstens einer Seite dieser Mittelebene im Wesentlichen senkrecht zu dieser erstreckt. Da sich die Facette in einer Ebene erstreckt, wobei sie aus einer Mehrzahl von einzelnen Planflächen an den einzelnen Zähnen des Gewindes besteht, kann die Facette durch eine entsprechende Gestaltung der inneren Wandung des Formwerkzeugs gebildet werden. Ein radiales Einspritzen einer Fasern enthaltenden plastifizierten polymeren Masse in die Kavität des Formwerkzeugs, insbesondere aus einem Innenkanal des Rohrabschnittes heraus, wird in der DE 10 2008 042 721 A1 nicht beschrieben und ist auch nicht anzunehmen, da der Rohrabschnitt integral mit dem gesamten Gehäuse gebildet wird. Zum Formen des Sensorgehäuses werden insbesondere Legierungen auf Grundlage von Zirkonium und Titan eingesetzt, die unter den Bezeichnungen Liquidmetal I Alloy und Liquidmetal II Alloy von der Firma Liquidmetal Technologies, Inc., Lake Forest, CA, USA vertrieben werden. Diese Legierungen haben die Besonderheit, bei Erhitzen eine Schmelze von temperaturabhängiger Zähigkeit und bei ausreichend schneller Abkühlung aus der Schmelze einen amorphen Festkörper von hoher Härte zu bilden.

Aus der WO 2009/124994 A1 ist ein Spritzgieß-Verfahren zur Herstellung eines ähnlichen Schraubteils mit ringförmigem Querschnitt, wie des vorstehend genannten, bekannt, wobei das Schraubteil einen hohlzylindrischen Grundkörper mit einem Innenkanal und mit einem Außengewinde auf der Grundkörper-Wandung aufweist. Gemäß diesem Verfahren ist vorgesehen, dass das Einspritzen der polymeren faserhaltigen Masse in die Kavität durch mindestens zwei Einspritzöffnungen derart erfolgt, dass sich die Fasern vorwiegend entsprechend den Hauptbeanspruchungsrichtungen axialer Zug und Torsion des Schraubteils ausrichten. Die Einspritzung erfolgt dabei in axialer Richtung, wobei die Masse ringförmig einen inneren Kern des Werkzeugs umströmt und zwischen den Einspritzöffnungen zusammenfließt. Die beanspruchsgerechte Struktur des bekannten Schraubteils besteht dabei darin, dass einerseits ein Anteil von Fasern, die in umfangsgemäßer Richtung des ringförmigen Querschnitts rechtwinklig zu einer Längsachse des Schraubteils orientiert sind, und andererseits auch ein Anteil von Fasern, die in axialer Richtung des Schraubteils orientiert sind, jeweils kleiner ist als 50 Prozent.

Auch aus der DE 10 2010 010 651 A1 ist ein ähnliches Schraubteil mit ringförmigem Querschnitt bekannt. Bei diesem Schraubteil sind einerseits der Grundkörper sowie andererseits eine Umfangsdichtung und/oder eine Gewindesicherung aus unterschiedlichen polymeren Werkstoffen in einem Mehrkomponenten-Spritzgießverfahren geformt und miteinander verbunden. Dadurch kann das Schraubteil vorteilhafterweise komplett in einer einzigen Fertigungsmaschine bzw. Form gespritzt werden, wobei die Lage der Einspritzöffnungen für den Grundkörper in der DE 10 2010 010 651 A1 nicht beschrieben ist. In technologisch vorteilhafter Weise kann zur formangepassten Aufnahme einer Gewindesicherung in dem Grundkörper beim Spritzgießen des Schraubteils eine, insbesondere axial verlaufende, Nut spanlos geformt werden, deren Tiefe etwa genauso groß wie die Höhe der Gewindesicherung, vorzugsweise jedoch geringfügig kleiner ist, so dass die Gewindesicherung über die Flanken des Gewindes hinaussteht. In bestimmten Ausführungsformen des bekannten Schraubteils kann der jeweilige Nutverlauf die Gewindegänge auch in unterschiedlichem Winkel kreuzen oder parallel zu den Gewindegängen verlaufen. Des Weiteren ist es möglich, dass der jeweilige Verlauf der Nut und der Gewindesicherung im Grundkörper des Schraubteils in oder entgegen einer Eindrehrichtung des Schraubteils gerichtet ist. Durch die entsprechende Richtungs- und Winkelwahl kann dabei mit Vorteil die Größe eines Losdrehmomentes des Schraubteils eingestellt werden.

Ein Schraubteil der eingangs genannten Art ist aus der WO 2013/092234 A1 bekannt. Dieses Dokument beschreibt ein hohlzylindrisches Schraubteil und Verfahren zu seiner Herstellung, durch das bei technologisch einfacher Durchführbarkeit das Schraubteil mit erhöhter Festigkeit, insbesondere mit erhöhter axialer Zugfestigkeit, herstellbar ist. Dabei ist vorgesehen, dass das Einspritzen einer faserhaltigen plastifizierten polymeren Masse radial durch mindestens eine Einspritzöffnung aus dem Innenkanal nach außen in einem Abschnitt oder in einem Bereich eines Abschnitts erfolgt, der nicht der Anlage einer Umfangsdichtung oder der Halterung und/oder Arretierung eines in das Schraubteil einführbaren Steckerteils dient. Stattdessen kann die Einspritzöffnung bevorzugt in einem Bereich liegen, der zwischen einem Dicht- und einem Haltebereich oder zwischen zwei Haltebereichen liegt. Insbesondere kann das Einspritzen durch die Einspritzöffnung in einem Abschnitt oder in einem Bereich eines Abschnitts des Grundkörpers erfolgen, in dem die Wand des Grundkörpers eine maximale Wandstärke aufweist, wie z. B. in einem zylindrisch ausgebildeten Abschnitt des Grundkörpers, der zur Stützung und/oder Führung des Steckerteils dient. Ein Problem besteht dabei darin, dass durch ein lokal unterschiedliches Schwindungsverhalten beim Erstarren der polymeren Masse in der Form dann bei einem späteren Einschrauben des bekannten Schraubteils im Rahmen seiner Montage Verformungen seines Innendurchmessers und im Grundkörper ein ungleichmäßiger Verlauf der inneren mechanischen Spannungen auftreten können.

Der vorliegenden Erfindung liegt die Aufgabe zugrunde, ein Schraubteil der gattungsgemäßen Art zu schaffen, welches bei seiner Montage formstabil bleibt und nach der Montage im Grundkörper einen gleichmäßigen Verlauf der in seinem Inneren auftretenden mechanischen Spannungen aufweist. Ebenso soll ein Verfahren zu seiner Herstellung geschaffen werden.

Erfindungsgemäß wird dies für das Schraubteil dadurch erreicht, dass in einem Bereich des Gewindes, der jeweils - durch die Wand des Grundkörpers getrennt - dem Bereich einer Anspritzstelle gegenüber liegt, eine das Gewinde unterbrechende Aussparung vorgesehen ist.

Für das Verfahren wird dies erfindungsgemäß dadurch erreicht, dass in einem Bereich des Gewindes, der jeweils - durch die Wand des Grundkörpers getrennt - dem Bereich der Anspritzstelle gegenüber liegt, durch Einlegen mindestens eines Kernes in das zum Spritzgießen des erfindungsgemäßen Schraubteils verwendete Formwerkzeug eine das Gewinde unterbrechende Aussparung erzeugt wird.

Durch die Erfindung wird solchermaßen mit Vorteil vermieden, dass bei der Herstellung des erfindungsgemäßen Schraubteils aufgrund lokal ungleichmäßigen Schwindungsverhaltens in der Wand erhabene Stellen entstehen könnten, die dann bei einer Montage - also beim Verschrauben des erfindungsgemäßen Schraubteils - nach innen gedrückt werden und den Innendurchmesser im Bereich der Anspritzstellen bzw. -punkte und gegebenenfalls im Bereich eines benachbarten Dichtabschnitts verformen könnten. Eine Verformung des Innendurchmessers des erfindungsgemäßen Schraubteils beim Einschrauben ist somit ausgeschlossen.

Die Aussparung oder - bei Vorhandensein mehrerer Anspritzstellen - auch mehrere Aussparungen können dabei durch Einlegen geeigneter Kerne in die zum Spritzgießen des erfindungsgemäßen Schraubteils verwendete Form erzeugt werden. In technologisch einfacher Weise können dabei die Kerne derart angeordnet werden, dass Hinterschneidungen in der Formkörpergeometrie nicht auftreten, wobei eine gleichmäßige Befüllung der Kavität im Werkzeug mit der faserhaltigen plastifizierten polymeren Masse gesichert ist. Sogenannte Faltkerne, die durch eine Mehrteiligkeit gekennzeichnet sind, brauchen dazu nicht eingesetzt werden.

Eine nach dem Einspritzen über Nachdruck in der Form gehaltene Kunststoffmasse schwindet bei der Herstellung des erfindungsgemäßen Schraubteils an den den Anspritzpunkten gegenüber liegenden Gewindeaußenseiten nicht weniger als in dem Zwischenraum zwischen den Anspritzpunkten, so dass insbesondere an den Gewindeflanken des Gewindes keine Erhöhungen entstehen. Dadurch entsteht im fertigen erfindungsgemäßen Schraubteil ein gleichmäßiger Verlauf der mechanischen Spannungen, der auch nach dem Einschrauben des Schraubteils in ein anderes Bauteil erhalten bleibt. Infolge einer sich beim Spritzgießen sehr homogen und im Falle insbesondere eines Ring-, Scheiben- oder Schirmangusses auch bindenahtfrei ausbildenden Struktur im äußeren Gewindebereich inklusive des Bereichs der äußeren Ausnehmung kann nach dem Einspritzen in die Kavität eine hohe Nachdruckwirksamkeit im Bereich der später zu belastenden Bauteilbereiche, wie der Gewindeflanken im Einschraubbereich, erzielt werden. Es ist dabei mit Vorteil nicht notwendig, an den Anspritzstellen technologisch aufwändige Nacharbeiten, insbesondere zur Entfernung von Angussgraten und/oder zur Glättung der Oberfläche vorzunehmen.

Neben einer sicheren und fertigungstechnisch aufwandsarmen Herstellbarkeit des erfindungsgemäßen Schraubteils ist somit auch eine hohe Qualität desselben gewährleistet.

Des Weiteren wird durch die erfindungsgemäße technische Problemlösung auch der Erkenntnis Rechnung getragen, dass die Fasern der erstarrten polymeren Masse im Bereich der Anspritzstellen weniger geordnet vorliegen als in anderen Bereichen des Schraubteils. Die erfindungsgemäß vorgesehene Aussparung bildet dabei eine Gewindeunterbrechung aus und stellt somit einen Bereich dar, in dem das Gewinde nicht trägt. Damit wird erreicht, dass das Gewinde vorteilhafterweise nur da trägt, wo die Fasern einen höheren Ordnungsgrad haben und die Gewindegänge dadurch eine höhere Stabilität aufweisen.

Weitere vorteilhafte Ausgestaltungsmerkmale der Erfindung sind in den Unteransprüchen sowie der folgenden Beschreibung enthalten.

Anhand eines bevorzugten Ausführungsbeispiels soll im Folgenden die Erfindung näher erläutert werden. Dabei zeigen:
- Fig. 1: eine perspektivische Darstellung einer bevorzugten Ausführung eines erfindungsgemäßen Schraubteils,
- Fig. 2: eine weitere perspektivische Darstellung des in Fig. 1 dargestellten erfindungsgemäßen Schraubteils in einer Ansicht von unten, d. h. von seiner Einschraubseite her,
- Fig. 2a: einen axialen Halbschnitt durch das in Fig. 1 und 2 dargestellte erfindungsgemäße Schraubteil,
- Fig. 3: in perspektivischer Darstellung, eine weitere bevorzugte Ausführung eines erfindungsgemäßen Schraubteils,
- Fig. 4: das in Fig. 3 dargestellte erfindungsgemäße Schraubteil im Axialschnitt.

Zu der anschließenden Beschreibung wird ausdrücklich betont, dass die Erfindung nicht auf die Ausführungsbeispiele und dabei auch nicht auf alle oder mehrere Merkmale der in den Ausführungsbeispielen beschriebenen Merkmalskombinationen beschränkt ist.

In den Figuren der Zeichnung sind dieselben Teile auch stets mit denselben Bezugszeichen versehen, so dass sie in der Regel auch jeweils nur einmal beschrieben werden.

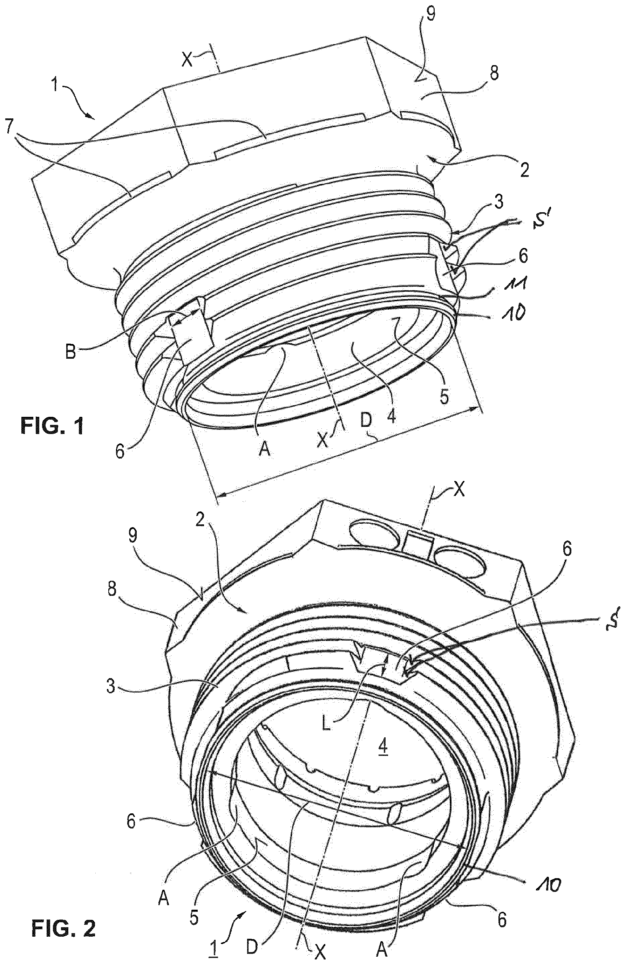

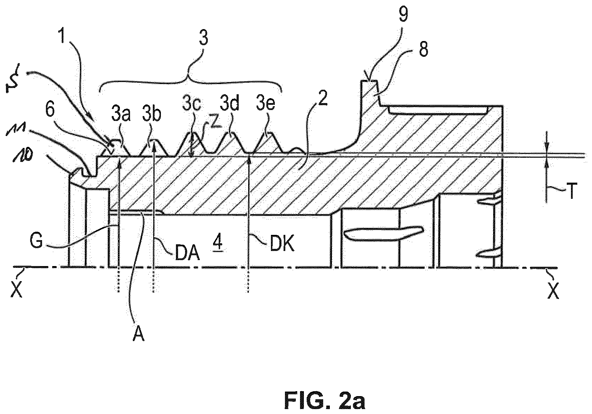

Wie sich zunächst aus Fig. 1, 2 und 2a ergibt, weist ein erfindungsgemäßes Schraubteil 1, wie eine Schraube, eine Mutter, ein Muffenteil, ein Rohrstecker, ein Rohrverbinder oder dergleichen, einen ringförmigem Querschnitt auf. Konkret ist als Schraubteil insbesondere eine Mutter, also ein Bauteil mit rotationssymmetrischem, insbesondere mit ringförmigem oder zumindest teilweise ringförmigem, Querschnitt dargestellt.

Das erfindungsgemäße Schraubteil 1 weist einen Grundkörper 2 auf, auf dem sich ein Gewinde 3 befindet. Der Grundkörper 2 hat die Gestalt eines Hohlzylinders und weist somit einen Innenkanal 4 mit einer Längsachse auf, die mit den Bezugszeichen X-X gekennzeichnet ist. Der Innenkanal 4 ist von einer Wand 5 des Grundkörpers 2 umgeben, auf der sich das Gewinde 3, insbesondere auf deren Außenseite, befindet. Bei dem Gewinde 3, welches insbesondere einen Außendurchmesser DA aufweist, kann es sich dabei bevorzugt um ein V-Gewinde mit außen abgeflachter Form handeln, das im Hinblick auf die spritzgießtechnische Formgebung und einen langzeitlichen Erhalt der Vorspannkraft optimiert ist.

Der Grundkörper 2 des Schraubteils 1 ist als Formteil in einem Spritzgießverfahren herstellbar bzw. hergestellt, wobei er durch ein radiales Einspritzen einer Fasern enthaltenden plastifizierten polymeren Masse in eine Kavität eines Formwerkzeugs und durch eine anschließende Entformung aus dem Werkzeug nach einem Erstarren der polymeren Masse entsteht. Das Einspritzen in die Kavität durch mindestens eine Einspritzöffnung des Formwerkzeugs erfolgt dabei radial insbesondere aus dem Innenkanal 4 nach außen. Das Werkzeug kann mit Vorteil aus Stahl bestehen, wobei durch dessen hohe Wärmekapazität und Wärmeleitfähigkeit eine ausgewogene und gleichmäßige aber gleichzeitig hocheffektive Temperierung gewährleistet werden kann.

Der Grundkörper 2 des Schraubteils 1 besteht aus einer thermo- oder duroplastischen polymeren Matrix, in die Fasern eingebettet sind, wobei zur Herstellung der Matrix insbesondere eine plastifizierte polymere Masse eingesetzt werden kann, die ein Epoxidharz (EP), ein ungesättigtes Polyesterharz (UP), ein Vinylesterharz (VE), ein Phenol-Formaldehydharz (PF), ein Diallylphthalatharz (DAP), ein Methacrylatharz (MMA), ein Polyurethan (PUR), ein Aminoharz, wie ein Melaminharz (MF/MP) oder ein Harnstoffharz (UF), enthält.

Die plastifizierte polymere Masse kann einen Volumenanteil an Fasern im Bereich von 2,5 bis 75 Prozent, vorzugsweise einen Masseanteil im Bereich von 30 bis 70 Prozent, insbesondere 50, 60 oder 65 Masseprozent an Glasfasern, enthalten. Die Fasern können - insbesondere in einer Ausführung als Glasfasern - eine Länge im Bereich von 0,1 mm bis 10 mm, vorzugsweise im Bereich von 0,2 mm bis 0,5 mm, und einen mittleren Durchmesser im Bereich von etwa 3 µm bis 35 µm, vorzugsweise im Bereich von 5 µm bis 20 µm, aufweisen.

Das Einspritzen in die Kavität des Formwerkzeugs kann mit Vorteil im Tunnel-, Scheiben-, Ring- oder Schirmanschnitt erfolgen, wobei im Tunnelanschnitt mindestens ein Zwei-Punkt-Anguss, bevorzugt bis zu einem Fünf-Punkt-Anguss, insbesondere ein Drei-Punkt-Anguss, erfolgen kann. Hierbei kann das Einspritzen in die Kavität durch mindestens zwei Einspritzöffnungen vorgenommen werden, die auf dem ringförmigen Innenquerschnitt des Formteils umfangsgemäß gleichmäßig verteilt liegen.

Der Grundkörper 2 des erfindungsgemäßen Schraubteils 1 weist aufgrund seiner Herstellungsart mindestens eine Anspritzstelle A, insbesondere in dem Innenkanal 4, auf. In der dargestellten bevorzugten Ausführung sind allerdings drei um 120° versetzte Anspritzpunkte bzw. -stellen A vorgesehen. Es wurde also ein Drei-Punkt-Anguss durchgeführt. Entsprechend liegen erfindungsgemäß den Anspritzpunkten A - durch die Wand 5 des Grundkörpers 2 getrennt -- jeweils Aussparungen 6 im Bereich des Gewindes 3, insbesondere des Außengewindes 3, gegenüber.

Die Geometrie dieser Aussparungen 6 bzw. Ausnehmungen am Gewinde 3 kann dabei prinzipiell von der Form her beliebig gewählt werden. Im Sinne der bevorzugten erfindungsgemäßen Herstellungsart, wonach die Aussparungen 6 durch Einlegen geeigneter Kerne in das zum Spritzgießen des erfindungsgemäßen Schraubteils 1 verwendete Formwerkzeug erzeugt werden können, ist die Form - in der jeweiligen Draufsicht auf die Aussparung 6 gesehen -jedoch rechteckig und bevorzugt eben gewählt. So brauchen im Werkzeug als Kerne keine Faltkerne eingesetzt werden. Es können beispielsweise drei Kerne verwendet werden, von denen im Hinblick auf das Schraubteil 1 einer radial und zwei tangential im Werkzeug platziert sind. Die durch den Einsatz von Kernen entstehenden Aussparungen 6 können sich dabei insbesondere von den eingangs erwähnten Facetten unterscheiden. Es handelt sich bei den Aussparungen 6 vorzugsweise nicht um bloße Abflachungen der Gewindezähne, also um eine Mehrzahl von einzelnen Planflächen an den einzelnen Gewindezähnen, sondern um jeweils eine Vertiefung im Verlauf des Gewindes 3. Die erfindungsgemäß vorgesehenen Aussparungen 6 weisen also vorzugsweise sowohl einen Grund G, als auch Seitenwände S auf.

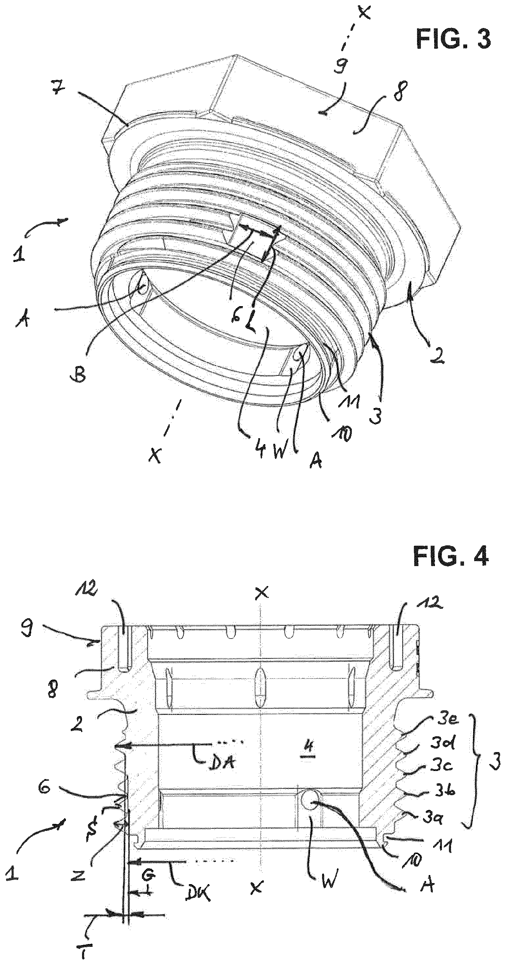

Beim Spritzgießen erfolgt im Werkzeug ein Übergang von einem Zuströmkanal für die plastifizierte polymere Masse in den Werkzeugbereich der Kavität zur Ausbildung des Formteils 1. Der dadurch beim Spritzgießprozess entstehende und danach zu entfernende Restkörper ist der sogenannte Anguss. Der Anguss muss, da er sich zunächst nach dem Entformen noch fest am Schraubteil 1 befindet, in einem nachträglichen Schritt vom Schraubteil 1 abgetrennt werden, was durch eine mechanische Bearbeitung, wie ein Stanzen, Bohren, Fräsen, Drehen und/oder Schneiden, oder durch eine thermische Bearbeitung, wie ein Schneidbrennen oder Laserschneiden, umgesetzt werden kann. Die nach einem Entfernen des Angusses im Innenkanal 4 verbleibenden Anspritzstellen A weisen insbesondere - in der jeweiligen Draufsicht gesehen - eine - wie insbesondere in Fig. 3 und 4 gezeigt - runde Form mit einem bevorzugten Durchmesser von 0,5 mm bis 2,0 mm auf.

Die Anspritzstellen A sind vorzugsweise visuell erkennbar, indem sie z. B. geringfügig (d. h. in einem Bereich ≤ 0,1 mm) gegenüber der übrigen Wandung vorstehen können. Dies ist insbesondere der Darstellung in Fig. 3 gut zu entnehmen. Auch ist die Dichte aufgrund des am Ende des Spritzgießens aufgewendeten Nachdrucks an den Anspritzstellen A etwas höher als in den daran angrenzenden Stellen, so dass in jedem Fall, also auch, wenn diese nicht visuell erkennbar sein sollten, gegebenenfalls durch werkstofftechnische Untersuchungen am erfindungsgemäßen Schraubteil 1, insbesondere durch moderne zerstörungsfreie Analyseverfahren, die Möglichkeit einer nachträglichen eindeutigen Identifizierung der Anspritzstellen A besteht. Auch die Faserausrichtung kann - z. B. röntgenographisch - festgestellt werden, wodurch die Anspritzstellen ebenfalls lokalisiert werden können, falls sie durch eine - allerdings erfindungsgemäß in vorteilhafter Weise vemeidbare - Oberflächenbearbeitung, wie beispielsweise durch ein Honen, visuell nicht mehr erkennbar sein sollten. Es ist bedarfsweise sogar möglich, beispielsweise mit Hilfe von Durchstrahlungsuntersuchungen mit polarisiertem Licht, die an einem aus durchsichtigem Material bestehendem Schraubteil 1 durchgeführt werden, den mechanischen Spannungszustand im Schraubteil 1 zu visualisieren.

Die jeweilige Fläche einer jeder Anspritzstelle A gegenüber liegenden Aussparung 6 sollte größer sein als die Fläche der Anspritzstelle A und diese in einer Aufeinander-Projektion überdecken. Für die in der Zeichnung dargestellte rechteckige Form der Aussparung 6 und die genannte bevorzugte Größe der Anspritzstelle A kann die in axialer Richtung X-X verlaufende Länge L (Fig. 2) der Aussparung 6 dazu beispielsweise mindestens 3,0 mm betragen, wobei eine Breite B (Fig. 1) der Aussparung 6 mindestens einen Wert von 3,0 mm annehmen sollte. Diese Werte gelten insbesondere dann, wenn der Durchmesser D des Innenkanals 4 im Bereich von 13,0 mm bis 23,0 mm liegt.

Außerdem kann bevorzugt - wie dies insbesondere durch Fig. 3 und 4 veranschaulicht wird - vorgesehen sein, dass ein Wandbereich W des Innenkanals 4, der jeweils eine Anspritzstelle A umgibt, vertieft ausgebildet ist. Der Betrag, um den dabei die Innenwand des Schraubteils 1 in diesem Wandbereich W gegenüber dem Durchmesser D des Innenkanals 4 zurückspringt, kann dabei bevorzugt nicht kleiner gewählt werden als der Betrag, um den die jeweilige Anspritzstelle A gegenüber der Wandung des Innenkanals 4 vorsteht. Dadurch wird erreicht, dass die Anspritzstellen A, obwohl sie gegenüber der Wandung - allerdings bevorzugt gegenüber derem vertieftem Bereich W - vorstehen, mit dem Durchmesser D fluchtend angeordnet sind oder sogar radial weiter außen liegen als der Durchmesser D.

Die erfindungsgemäß im Bereich des Gewindes 3 vorgesehenen Aussparungen 6 können im Rahmen der Erfindung insbesondere derart angeordnet und dimensioniert sein, dass sie im Bereich von nicht tragenden Gewindegängen liegen. Die ersten 0,5 bis 2,5, bevorzugt die ersten 1,5, der insgesamt vorhandenen Gewindegänge 3a, 3b, 3c 3d, 3e, können nämlich mit Vorteil nicht tragend ausgelegt sein, sondern lediglich eine Einschraubhilfe darstellen. Diese nicht tragenden Gewindegänge sind in Fig. 2a mit den Bezugszeichen 3a und 3b bezeichnet. Sie weisen einen Außendurchmesser DA auf, der kleiner ist, als der der Außendurchmesser DA der tragenden Gewindegänge 3c, 3d, 3e.

Das Gewinde 3 sollte allerdings bevorzugt mindestens zwei tragende Gewindegänge 3c, 3d, 3e aufweisen, welche nicht nur einen größeren Außendurchmesser DA als die nicht tragenden Gewindegänge 3a, 3b aufweisen, sondern auch über einen um bis zu 0,15 mm bis 0,3 mm, insbesondere um bis zu 0,27 mm, größeren Kerndurchmesser DK verfügen, als es der Kerndurchmesser DK im Bereich der nicht tragenden Gewindegänge 3a, 3b ist. Dies erhöht die Festigkeit des erfindungsgemäßen Schraubteils 1, da im tragenden Gewindeteil mehr Kunststoff vorhanden ist, und somit eine größere Stärke der Wand 5 vorliegt.

Die Ausnehmungen 6 können insbesondere im Bereich der nicht tragenden Gewindegänge 3a, 3b angeordnet sein, wobei ihr Grund G bevorzugt mindestens in einer Ebene liegt, die durch eine Tangente an die Umfangsfläche des Gewindekerndurchmessers DK in diesem Bereich beschrieben ist. Besonders bevorzugt sollten sie bis auf eine Tiefe T unterhalb der Umfangsfläche des Gewindekerndurchmessers DK im Bereich der tragenden Gewindegänge 3c, 3d, 3e von bis zu 0,3 mm, insbesondere 0,1 mm, vertieft liegen, so dass im verschraubten Zustand der Grund G der Ausnehmungen 6 nicht in Berührung mit einem Gegengewinde kommt. Eine Mindesttiefe T sollte unter diesem Gesichtspunkt z. B. 25 % einer Zahnhöhe Z der tragenden Gewindegänge 3c, 3d, 3e (in Fig. 4 auch 3a) - gemessen vom kleinsten Gewindekerndurchmesser DK (siehe Fig. 2a und 4) - betragen.

Durch den Spritzgießprozess kann auch - wie in den Ausführungen des erfindungsgemäßen Schraubteils 1 gezeigt - beim Anspritzen am Grundkörper 2, insbesondere endständig auf der dem Gewinde 3 gegenüber liegenden Seite, bevorzugt ein radial aufgeweiteter Flanschansatz 8 ausgebildet werden, der insbesondere eine polygonale, insbesondere sechseckige, Außenkontur 9 zum manuellen Angriff oder zum Angriff eines Schraubwerkzeugs aufweisen kann. Der Bund am Flanschansatz 8 kann insbesondere als Scheibe ausgelegt sein. Dies verhindert, dass beim Einschrauben in Bohrungen eine vorhandene, beispielsweise aus einem Lack oder aus eloxiertem Aluminium bestehende Beschichtung beschädigt wird.

Beim Spritzgießen erfolgt die Entlüftung in der Regel durch die Trennfuge des Werkzeuges, die zu diesem Zweck aufgeraut sein kann. Es gibt damit keine diskreten Entlüftungsstellen an der Formteiloberfläche, an denen das gleiche Problem auftreten würde, welches eingangs für die Anspritzstellen genannt wurde. Das bedeutet, dass am erfindungsgemäßen Schraubteil 1 keine den Anspritzpunkten ähnlichen Entlüftungsstellen vorhanden sind, an denen durch ein lokal unterschiedliches Schwindungsverhalten beim Erstarren der polymeren Masse bei einem späteren Einschrauben Verformungen oder ein ungleichmäßiger Verlauf der inneren mechanischen Spannungen auftreten könnten.

Die Erfindung ist nicht auf die dargestellten Ausführungsbeispiele beschränkt, sondern umfasst auch alle im Sinne der Erfindung gleichwirkenden Ausführungen. So können beispielsweise die Aussparungen bzw. Ausnehmungen 6 eine andere Form und Größe aufweisen, als in den Beispielen dargestellt ist. Dennoch wird erreicht, dass das Schraubteil 1 bei seiner Montage formstabil bleibt und nach der Montage im Grundkörper 2 einen gleichmäßigen Verlauf der in seinem Inneren auftretenden mechanischen Spannungen aufweist. Da das erfindungsgemäße Schraubteil 1 - einerseits durch die Aussparungen 6 im Bereich des vorzugsweise als Außengewinde 3 ausgebildeten Gewindes 3 und andererseits bevorzugt auch durch die vertieften Wandbereiche W im Innenkanal 4 - vorzugsweise im Bereich der Anspritzstellen A und ihrer unmittelbaren Umgebung - sowie auch - wie in Fig. 4 dargestellt - durch eine von der Stirnseite des Grundkörpers 2 des Schraubteils 1 ausgehende Materialausnehmung 12 im Flanschansatz 8 einen verringerten Materialeinsatz aufweist, ergeben sich neben der damit verbundenen Materialeinsparung in dem erfindungsgemäßen Schraubteil 1 als weitere Vorteile eine erhöhte Nachdruckwirksamkeit und damit eine Erhöhung der Prozesssicherheit und Reproduzierbarkeit bei der erfindungsgemäßen Herstellung. Außerdem wird eine Verkürzung des Produktionzyklus möglich und es tritt eine Minimierung von Lunkern u. a. Fehlstellen auf.

Die von der Stirnseite des Schraubteils1 ausgehende Materialausnehmung 12 im Flanschansatz 8 hat folgende vorteilhafte Wirkung. Kunststoffgerecht konstruierte Bauteile sollten idealerweise mit gleichen Wandstärken konstruiert sein, was sich allerdings bei dem erfindungsgemäßen Schraubteil 1 nicht umsetzen lässt. Das größte Volumen des erfindungsgemäßen Schraubteils 1 befindet sich im Flanschansatz 8 mit seiner insbesondere Sechskant-Außenkontur 9. Würde die Anspritzung auf nicht erfindungsgemäße Weise dort erfolgen, wäre es spritztechnisch gut. Erfindungsgemäß befinden sich jedoch die radialen Anspritzstellen A - durch die Wand 5 des Grundkörpers 2 getrennt - gegenüber den Aussparungen 6 im Bereich des Gewindes 3. Diese Anbindung des erfindungsgemäßen Schraubteils 1 an den Angusskanal bedeutet, dass ausgehend von der Seite des kleineren Volumens des Schraubteils 1 (Bereich des Gewindes 3) dann erst später die Seite mit seinem größeren Volumen (Flanschansatz 8) gefüllt wird. Im kleinen Volumen erstarrt die Masse früher, somit kann der Nachdruck, der gegen die Schwindung arbeitet, nicht mehr wirksam werden. Das erfindungsgemäße Schraubteil 1 kann - wie in der Zeichnung dargestellt - am freien axialen Ende des Grundkörpers 2 beispielsweise einen Tragansatz 10 mit einer Ringnut 11 aufweisen. Die größeren Masseanhäufungen am anderen Ende des Grundkörpers 2 ziehen durch ihre Schwindung beim Abkühlen das Material aus der Ringnut 11 unterschiedlich stark heraus, so dass die Ringnut 11 - und auch der sehr eng tolerierte Innenbereich - des Schraubteils 1 verzerrt werden. Dem wird durch die von der Stirnseite des Grundkörpers 2 des Schraubteils1 ausgehende Materialausnehmung 12 im Flanschansatz 8 abgeholfen, indem das von der Kunststoffmasse gefüllte Volumen des Flanschansatzes 8 an das Volumen im Gewindebereich 3 angeglichen wird. Durch die dabei auftretende, vorstehend schon erwähnte erhöhte Nachdruckwirksamkeit im erfindungsgemäßen Verfahren ist es möglich, diesen an sich bekannten Tragansatz 10 einschließlich der Ringnut 11 mit engeren Maßtoleranzen herstellen zu können, als dies bisher möglich war.

Der Fachmann kann dabei die Erfindung auch durch weitere zweckmäßige technische Ausgestaltungsformen ergänzen, ohne dass der Rahmen der Erfindung verlassen wird. So können beispielsweise die Kanten 7 eines sechseckigen Flanschansatzes 8 jeweils eine Anspiegelung von bis zu 30°, insbesondere von 10°, aufweisen, um auch mit einem eventuell schräg ansetzenden Schraubwerkzeug ein gleichmäßiges Drehmoment auf das erfindungsgemäße Schraubteil 1 übertragen zu können.

### Bezugszeichen

- 1: Schraubteil
- 2: Grundkörper von 1
- 3: Gewinde auf 1
- 3a, 3b: nicht tragende Gewindegänge von 3 (Fig. 2a)
- 3c, 3d, 3e: tragende Gewindegänge von 3 (Fig. 2a)
- 4: Innenkanal von 1
- 5: Wand von 2 um 4 zwischen A und 6
- 6: Aussparung im Bereich von 3
- 7: Kante von 8
- 8: Flanschansatz von 2
- 9: Außenkontur von 8
- 10: Tragansatz an 2
- 11: Ringnut in 10
- 12: Materialausnehmung in 8
- A: Anspritzstelle von 2 (in 4)
- B: Breite von 6
- D: Durchmesser von 4
- DA: Außendurchmesser von 3
- DK: Kerndurchmesser von 3a, 3b, 3c, 3d, 3e
- G: Grund von 6
- L: Länge von 6
- S: Seitenwand von 6
- W: vertiefter Wandbereich in 4 um A
- X-X: Längsachse von 1
- Z: Zahnhöhe Z

## Patentansprüche

1. Schraubteil (1) mit ringförmigem Querschnitt, wie eine Schraube, eine Mutter, ein Muffenteil, ein Rohrstecker oder ein Rohrverbinder, welches einen hohlzylindrischen Grundkörper (2) mit einem Innenkanal (4) aufweist, der von einer Wand (5) des Grundkörpers (2) umgeben ist, die ein Gewinde (3) aufweist, wobei der Grundkörper (2) durch ein radiales Einspritzen einer Fasern enthaltenden plastifizierten polymeren Masse in eine Kavität eines Formwerkzeugs durch mindestens eine Einspritzöffnung des Formwerkzeugs und durch eine anschließende Entformung aus dem Formwerkzeug nach einem Erstarren der polymeren Masse hergestellt ist, wobei ein Anguss entfernt wird, so dass der Grundkörper (2) mindestens eine Anspritzstelle (A) aufweist,
**dadurch gekennzeichnet, dass** in einem Bereich des Gewindes (3), der jeweils - durch die Wand (5) des Grundkörpers (2) getrennt - dem Bereich der Anspritzstelle (A) gegenüber liegt, eine das Gewinde (3) unterbrechende Aussparung (6) vorgesehen ist.

2. Schraubteil (1) nach Anspruch 1,
**dadurch gekennzeichnet, dass** das Gewinde (3) ein Außengewinde (3) ist, welches sich auf der Wand (5) des Grundkörpers (2) befindet, wobei der Grundkörper (2) durch ein radiales Einspritzen der Fasern enthaltenden plastifizierten polymeren Masse in die Kavität des Formwerkzeugs aus dem Innenkanal (4) hergestellt ist, so dass der Grundkörper (2) in dem Innenkanal (4) die mindestens eine Anspritzstelle (A) aufweist.

3. Schraubteil (1) nach Anspruch 1 oder 2,
**dadurch gekennzeichnet, dass** der Grundkörper (2) aus einer plastifizierten polymere Masse gebildet ist, die ein Epoxidharz (EP), ein ungesättigtes Polyesterharz (UP), ein Vinylesterharz (VE), ein Phenol-Formaldehydharz (PF), ein Diallylphthalatharz (DAP), ein Methacrylatharz (MMA), ein Polyurethan (PUR), ein Aminoharz, wie ein Melaminharz (MF/MP) oder ein Harnstoffharz (UF), enthält.

4. Schraubteil (1) nach einem der Ansprüche 1 bis 3,
**dadurch gekennzeichnet, dass** die plastifizierte polymere Masse einen Volumenanteil an Fasern im Bereich von 2,5 bis 75 Prozent, vorzugsweise einen Masseanteil im Bereich von 30 bis 70 Prozent, insbesondere 50, 60 oder 65 Masseprozent an Glasfasern, enthält.

5. Schraubteil (1) nach einem der Ansprüche 1 bis 4,
**dadurch gekennzeichnet, dass** die Fasern - insbesondere in einer Ausführung als Glasfasern - eine Länge im Bereich von 0,1 mm bis 10 mm, vorzugsweise im Bereich von 0,2 mm bis 0,5 mm, und einen mittleren Durchmesser im Bereich von etwa 3 µm bis 35 µm, vorzugsweise im Bereich von 5 µm bis 20 µm, aufweisen.

6. Schraubteil (1) nach einem der Ansprüche 1 bis 5,
**dadurch gekennzeichnet, dass** der Grundkörper (2) zwei oder mehr, insbesondere drei um 120° versetzte Anspritzstellen (A) aufweist, wobei im Bereich des Gewindes (3) - jeweils durch die Wand (5) des Grundkörpers (2) getrennt - jeder dieser Anspritzstellen (A) eine Aussparung (6) gegenüber liegt.

7. Schraubteil (1) nach einem der Ansprüche 1 bis 6,
**dadurch gekennzeichnet, dass** die Form der Aussparung(en) 6 - in der jeweiligen Draufsicht auf die Aussparung (6) gesehen - rechteckig ist.

8. Schraubteil (1) nach einem der Ansprüche 1 bis 7,
**dadurch gekennzeichnet, dass** die Anspritzstellen (A) - in der jeweiligen Draufsicht auf die Anspritzstelle (A) gesehen - eine runde Form mit einem bevorzugten Durchmesser von 0,5 mm bis 2,0 mm aufweisen.

9. Schraubteil (1) nach einem der Ansprüche 1 bis 8,
**dadurch gekennzeichnet, dass** die Fläche einer jeder Anspritzstelle (A) gegenüber liegenden Aussparung (6) größer ist als die Fläche der Anspritzstelle (A) und die Fläche der Aussparung (6) die Fläche der Anspritzstelle (A) in einer Projektion aufeinander überdeckt.

10. Schraubteil (1) nach einem der Ansprüche 1 bis 9,
**dadurch gekennzeichnet, dass** die Anspritzstelle (A) gegenüber der Wand des Innenkanals (4), vorzugsweise um einen Betrag von ≤ 0,1 mm, vorsteht, wobei insbesondere ein Wandbereich (W) des Innenkanals (4), welcher jeweils eine Anspritzstelle (A) umgibt, vertieft ausgebildet ist, wobei besonders bevorzugt ein Betrag, um den die Wand des Innenkanals (4) in dem vertieften Wandbereich (W) gegenüber dem Durchmesser (D) des Innenkanals (4) zurückspringt, nicht kleiner ist als der Betrag, um den die Anspritzstellen (A) gegenüber der Wandung des Innenkanals (4) vorstehen.

11. Schraubteil (1) nach einem der Ansprüche 1 bis 10,
**dadurch gekennzeichnet, dass** die Aussparungen (6) im Bereich von Gewindegängen (3a, 3b) liegen, die nicht dazu bestimmt sind, bei Verwendung des Schraubteils eine tragende Funktion zu übernehmen.

12. Schraubteil (1) nach einem der Ansprüche 1 bis 11,
**dadurch gekennzeichnet, dass** die ersten 0,5 bis 2,5, bevorzugt die ersten 1,5, der insgesamt vorhandenen Gewindegänge (3a, 3b, 3c 3d, 3e) des Gewindes (3) derart ausgelegt sind, dass sie nicht dazu bestimmt sind, bei Verwendung des Schraubteils eine tragende Funktion zu übernehmen, indem sie einen Außendurchmesser (DA) aufweisen, der kleiner ist, als der Außendurchmesser (DA) von Gewindegängen (3c, 3d, 3e), die dazu bestimmt sind, bei Verwendung des Schraubteils eine tragende Funktion zu übernehmen.

13. Schraubteil (1) nach einem der Ansprüche 1 bis 12,
**dadurch gekennzeichnet, dass** das Gewinde (3) Gewindegänge (3a, 3b), die nicht dazu bestimmt sind, bei Verwendung des Schraubteils eine tragende Funktion zu übernehmen, und mindestens zwei Gewindegänge (3c, 3d, 3e), die dazu bestimmt sind, bei Verwendung des Schraubteils eine tragende Funktion zu übernehmen, aufweist, welche bevorzugt einen um bis zu 0,15 mm bis 0,3 mm, insbesondere um bis zu 0,27 mm, größeren Kerndurchmesser (DK) aufweisen als die Gewindegänge (3a, 3b), die nicht dazu bestimmt sind, bei Verwendung des Schraubteils eine tragende Funktion zu übernehmen.

14. Schraubteil (1) nach einem der Ansprüche 1 bis 13,
**dadurch gekennzeichnet, dass** ein jeweiliger Grund (G) der Ausnehmung(en) (6) in einer Ebene liegt, die durch eine Tangente an die Umfangsfläche eines Kerndurchmessers (DK), beschrieben ist, oder der tiefer liegt als diese Ebene, wobei der jeweilige Grund (G) der Ausnehmung(en) (6) in einer Ebene liegt, die um eine Tiefe (T) von bis zu 0,3 mm, insbesondere von 0,1 mm, gegenüber der Tangente an die Umfangsfläche des Kerndurchmessers (DK) des Gewindes (3) vertieft liegt.

15. Schraubteil (1) nach einem der Ansprüche 1 bis 14,
**dadurch gekennzeichnet, dass** am Grundkörper (2), insbesondere endständig auf der dem Gewinde (3) gegenüber liegenden Seite, bevorzugt ein radial aufgeweiteter, besonders bevorzugt als Scheibe ausgelegter Flanschansatz (8) ausgebildet ist, der insbesondere eine polygonale, insbesondere sechseckige, Außenkontur (9) zum manuellen Angriff oder zum Angriff eines Schraubwerkzeugs aufweist, wobei bevorzugt die Kanten des Flanschansatzes (8) jeweils eine Anspiegelung von bis zu 30°, insbesondere von 10°, aufweisen, und wobei besonders bevorzugt der Grundkörper (2) im Flanschansatz (8) eine von der Stirnseite ausgehende Materialausnehmung (12) aufweist.

16. Verfahren zur Herstellung eines Schraubteils (1) nach einem der Ansprüche 1 bis 15, welches einen hohlzylindrischen Grundkörper (2) mit einem Innenkanal (4) aufweist, der von einer Wand (5) des Grundkörpers (2) umgeben ist, die Gewinde (3) aufweist, wobei der Grundkörper (2) durch ein radiales Einspritzen einer Fasern enthaltenden plastifizierten polymeren Masse in eine Kavität eines Formwerkzeugs durch mindestens eine Einspritzöffnung des Formwerkzeugs und durch eine anschließende Entformung aus dem Formwerkzeug nach einem Erstarren der polymeren Masse hergestellt wird, wobei danach ein Anguss entfernt wird, so dass der Grundkörper (2) mindestens eine Anspritzstelle (A) aufweist,
**dadurch gekennzeichnet, dass** in einem Bereich des Gewindes (3), der jeweils - durch die Wand (5) des Grundkörpers (2) getrennt - dem Bereich der Anspritzstelle (A) gegenüber liegt, durch Einlegen mindestens eines Kernes in das zum Spritzgießen des Schraubteils (1) verwendete Formwerkzeug eine das Gewinde unterbrechende Aussparung (6) erzeugt wird.

17. Verfahren nach Anspruch 16,
**dadurch gekennzeichnet, dass** der Kern oder mehrere Kerne derart angeordnet werden, dass keine Hinterschneidungen in der Geometrie des Grundkörpers (2) des Schraubteils (1) auftreten.

## Claims

1. Screw part (1) having an annular cross section, such as a screw, a nut, a sleeve part, a pipe plug or a pipe connector, which has a hollow-cylindrical basic body (2) with an inner passage (4) which is surrounded by a wall (5) of the basic body (2) that has a thread (3), wherein the basic body (2) is produced by radially injecting a fibre-containing plasticized polymer compound into a cavity of a mould through at least one injection opening of the mould and by subsequently demoulding it from the mould after the polymer compound has solidified, wherein a sprue is removed such that the basic body (2) has at least one gate point (A),
**characterized in that** a recess (6) which interrupts the thread (3) is provided in a region of the thread (3) that in each case - separated by the wall (5) of the basic body (2) - is situated opposite the region of the gate point (A).

2. Screw part (1) according to Claim 1,
**characterized in that** the thread (3) is an external thread (3) which is situated on the wall (5) of the basic body (2), wherein the basic body (2) is produced by radially injecting the fibre-containing plasticized polymer compound into the cavity of the mould from the inner passage (4) such that the basic body (2) has the at least one gate point (A) in the inner passage (4).

3. Screw part (1) according to Claim 1 or 2,
**characterized in that** the basic body (2) is formed from a plasticized polymer compound which contains an epoxy resin (EP), an unsaturated polyester resin (UP), a vinyl ester resin (VE), a phenol-formalydehyde resin (PF), a diallylphthalate resin (DAP), a methacrylate resin (MMA), a polyurethane (PUR), an amino resin, such as a melamine resin (MF/MP) or a urea resin (UF).

4. Screw part (1) according to one of Claims 1 to 3,
**characterized in that** the plasticized polymer compound contains a fraction by volume of fibres in the range from 2.5 to 75 percent, preferably a mass fraction in the range from 30 to 70%, in particular 50, 60 or 65 percent by mass of glass fibres.

5. Screw part (1) according to one of Claims 1 to 4,
**characterized in that** the fibres - in particular in an embodiment as glass fibres - have a length in the range from 0.1 mm to 10 mm, preferably in the range from 0.2 mm to 0.5 mm, and a mean diameter in the range from approximately 3 µm to 35 µm, preferably in the range from 5 µm to 20 µm.

6. Screw part (1) according to one of Claims 1 to 5,
**characterized** the basic body (2) has two or more gate points (A), in particular three which are offset by 120°, wherein a recess (6) is situated opposite to each of these gate points (A) in the region of the thread (3) - in each case separated by the wall (5) of the basic body (2).

7. Screw part (1) according to one of Claims 1 to 6,
**characterized in that** the shape of the recess(es) (6) - as viewed in the respective plan view of the recess (6) - is rectangular.

8. Screw part (1) according to one of Claims 1 to 7,
**characterized in that** the gate points (A) - as viewed in the respective plan view of the gate point (A) - have a round shape with a preferred diameter of 0.5 mm to 2.0 mm.

9. Screw part (1) according to one of Claims 1 to 8,
**characterized in that** the area of a recess (6) situated opposite to each gate point (A) is larger than the area of the gate point (A), and the area of the recess (6) covers the area of the gate point (A) in a projection onto one another.

10. Screw part (1) according to one of Claims 1 to 9,
**characterized in that** the gate point (A) projects with respect to the wall of the inner passage (4), preferably by an amount of ≤ 0.1 mm, wherein in particular a wall region (W) of the inner passage (4) that in each case surrounds a gate point (A) is depressed in form, wherein particularly preferably an amount by which the wall of the inner channel (4) in the depressed wall region (W) is set back with respect to the diameter (D) of the inner passage (4) is not less than the amount by which the gate points (A) project with respect to the wall of the inner passage (4).

11. Screw part (1) according to one of Claims 1 to 10,
**characterized in that** the recesses (6) are situated in the region of the thread turns (3a, 3b) which are not intended to perform a load-bearing function during use of the screw part.

12. Screw part (1) according to one of Claims 1 to 11,
**characterized in that** the first 0.5 to 2.5, preferably the first 1.5, of the total present thread turns (3a, 3b, 3c, 3d, 3e) of the thread (3) are designed in such a way that they are not intended to perform a load-bearing function during use of the screw part by virtue of the fact that they have an outside diameter (DA) which is less than the outside diameter (DA) of thread turns (3c, 3d, 3e) which are intended to perform a load-bearing function during use of the screw part.

13. Screw part (1) according to one of Claims 1 to 12,
**characterized in that** the thread (3) has thread turns (3a, 3b) which are not intended to perform a load-bearing function during use of the screw part, and at least two thread turns (3c, 3d, 3e) which are intended to perform a load-bearing function during use of the screw part and which preferably have a core diameter (DK) which is larger by up to 0.15 mm to 0.3 mm, in particular by up to 0.27 mm, than the thread turns (3a, 3b) which are not intended to perform a load-bearing function during use of the screw part.

14. Screw part (1) according to one of Claims 1 to 13,
**characterized in that** a respective bottom (G) of the cutout(s) (6) lies in a plane which is described by a tangent to the circumferential surface of a core diameter (DK), or which bottom is situated deeper than this plane, wherein the respective bottom (G) of the cutout(s) (6) lies in a plane which is depressed by a depth (T) of up to 0.3 mm, in particular of 0.1 mm, with respect to the tangent to the circumferential surface of the core diameter (DK) of the thread (3).

15. Screw part (1) according to one of Claims 1 to 14,
**characterized in that** a radially widened flange attachment (8), which is particularly preferably designed as a disc, is preferably formed on the basic body (2), in particular terminally on the side situated opposite to the thread (3), and in particular has a polygonal, in particular hexagonal, outer contour (9) for the manual engagement or for the engagement of a screwing tool, wherein preferably the edges of the flange attachment (8) each have a spot facing of up to 30°, in particular of 10°, and wherein particularly preferably the basic body (2) has in the flange attachment (8) a material cutout (12) emanating from the end side.

16. Method for producing a screw part (1) according to one of Claims 1 to 15, which has a hollow-cylindrical basic body (2) with an inner passage (4) which is surrounded by a wall (5) of the basic body (2) that has a thread (3), wherein the basic body (2) is produced by radially injecting a fibre-containing plasticized polymer compound into a cavity of a mould through at least one injection opening of the mould and by subsequently demoulding it from the mould after the polymer compound has solidified, wherein a sprue is then removed such that the basic body (2) has at least one gate point (A),
**characterized in that** a recess (6) which interrupts the thread is created in a region of the thread (3) that in each case - separated by the wall (5) of the basic body (2) - is situated opposite to the region of the gate point (A), by inserting at least one core into the mould used for injection-moulding the screw part (1).

17. Method according to Claim 16,
**characterized in that** the core or a plurality of cores is or are arranged in such a way that no undercuts occur in the geometry of the basic body (2) of the screw part (1).

## Revendications

1. Pièce filetée (1) de section transversale annulaire telle qu'une vis, un écrou, une partie de manchon, un connecteur enfichable tubulaire ou un connecteur tubulaire, qui présente un corps de base cylindrique creux (2) avec un canal interne (4) qui est entouré par une paroi (5) du corps de base (2), qui présente un filetage (3), le corps de base (2) étant fabriqué par injection radiale d'une masse polymère plastifiée contenant des fibres dans une cavité d'un outil de moulage par au moins une ouverture d'injection de l'outil de moulage et par démoulage subséquent hors de l'outil de moulage après rigidification de la masse polymère, une carotte étant enlevée de telle sorte que le corps de base (2) présente au moins une zone d'injection (A),
**caractérisée en ce que** dans une région du filetage (3) qui est à chaque fois opposée, de manière séparée par la paroi (5) du corps de base (2), à la région de la zone d'injection (A), est prévu un évidement (6) interrompant le filetage (3).

2. Pièce filetée (1) selon la revendication 1,
**caractérisée en ce que** le filetage (3) est un filetage extérieur (3) qui se trouve sur la paroi (5) du corps de base (2), le corps de base (2) étant fabriqué par injection radiale de la masse polymère plastifiée contenant des fibres dans la cavité de l'outil de moulage à partir du canal interne (4), de telle sorte que le corps de base (2) présente dans le canal interne (4) l'au moins une zone d'injection (A).

3. Pièce filetée (1) selon la revendication 1 ou 2, **caractérisée en ce que** le corps de base (2) est formé d'une masse polymère plastifiée qui contient une résine époxy (EP), une résine polyester insaturée (UP), une résine d'ester vinylique (VE), une résine de phénol-formaldéhyde (PF), une résine de diallylphtalate (DAP), une résine de méthacrylate (MMA), un polyuréthane (PUR), une résine aminée, telle qu'une résine de mélamine (MF/MP) ou une résine uréique (UF).

4. Pièce filetée (1) l'une quelconque des revendications 1 à 3,
**caractérisée en ce que** la masse polymère plastifiée contient une fraction volumique de fibres dans une plage de 2,5 à 75 pour cent, de préférence une fraction volumique dans une plage de 30 à 70 pour cent, particulièrement de 50, 60 ou 65 pour cent en masse de fibres de verre.

5. Pièce filetée (1) selon l'une quelconque des revendications 1 à 4,
**caractérisée en ce que** les fibres - en particulier lorsqu'elles sont réalisées en tant que fibres de verre - présentent une longueur dans une plage de 0,1 mm à 10 mm, de préférence dans une plage de 0,2 mm à 0,5 mm, et un diamètre moyen dans une plage d'environ 3 µm à 35 µm, de préférence dans une plage de 5 µm à 20 µm.

6. Pièce filetée (1) l'une quelconque des revendications 1 à 5,
**caractérisée en ce que** le corps de base (2) présente deux ou plus de deux, en particulier trois, zones d'injection (A) décalées de 120°, un évidement (6) étant opposé à chacune de ces zones d'injection (A) dans la région du filetage (3) - à chaque fois de manière séparée par la paroi (5) du corps de base (2).

7. Pièce filetée (1) selon l'une quelconque des revendications 1 à 6,
**caractérisée en ce que** la forme du ou des évidements (6), à chaque fois en vue de dessus sur l'évidement (6), est rectangulaire.

8. Pièce filetée (1) selon l'une quelconque des revendications 1 à 7,
**caractérisée en ce que** les zones d'injection (A), à chaque fois en vue de dessus sur la zone d'injection (A), présentent une forme ronde ayant un diamètre préféré de 0,5 mm à 2,0 mm.

9. Pièce filetée (1) selon l'une quelconque des revendications 1 à 8,
**caractérisée en ce que** la surface d'un évidement (6) opposé à chaque zone d'injection (A) est supérieure à la surface de la zone d'injection (A) et la surface de l'évidement (6) recouvre en projection la surface de la zone d'injection (A).

10. Pièce filetée (1) selon l'une quelconque des revendications 1 à 9,
**caractérisée en ce que** la zone d'injection (A) dépasse par rapport à la paroi du canal interne (4), de préférence d'une valeur de ≤ 0,1 mm, en particulier une région de paroi (W) du canal interne (4) qui entoure à chaque fois une zone d'injection (A) est réalisée de manière enfoncée, une mesure suivant laquelle la paroi du canal interne (4) dans la région de paroi enfoncée (W) est en retrait par rapport au diamètre (D) du canal interne (4) n'étant de manière particulièrement préférée pas inférieure à la mesure suivant laquelle les zones d'injection (A) dépassent par rapport à la paroi du canal interne (4).

11. Pièce filetée (1) selon l'une quelconque des revendications 1 à 10,
**caractérisée en ce que** les évidements (6) sont situés dans la région de pas de filetage (3a, 3b) qui ne sont pas prévus pour assurer une fonction de support lors de l'utilisation de la pièce filetée.

12. Pièce filetée (1) selon l'une quelconque des revendications 1 à 11,
**caractérisée en ce que** les premiers 0,5 à 2,5, de préférence les premiers 1,5, parmi tous les pas de filetage prévus (3a, 3b, 3c, 3d, 3e) du filetage (3) sont conçus de telle sorte qu'ils ne soient pas prévus pour assurer une fonction de support lors de l'utilisation de la pièce filetée, par le fait qu'ils présentent un diamètre extérieur (DA) qui est inférieur au diamètre extérieur (DA) de pas de filetage (3c, 3d, 3e) qui sont prévus pour assurer une fonction de support lors de l'utilisation de la pièce filetée.

13. Pièce filetée (1) selon l'une quelconque des revendications 1 à 12,
**caractérisée en ce que** le filetage (3) présente des pas de filetage (3a, 3b) qui ne sont pas prévus pour assurer une fonction de support lors de l'utilisation de la pièce filetée et au moins deux pas de filetage (3c, 3d, 3e) qui sont prévus pour assurer une fonction de support lors de l'utilisation de la pièce filetée, lesquels présentent de préférence un diamètre de noyau (DK) supérieur de jusqu'à 0,15 mm à 0,3 mm, en particulier de jusqu'à 0,27 mm à celui des pas de filetage (3a, 3b) qui ne sont pas prévus pour assurer une fonction de support lors de l'utilisation de la pièce filetée.

14. Pièce filetée (1) selon l'une quelconque des revendications 1 à 13,
**caractérisée en ce qu'**une base respective (G) du ou des évidements (6) est située dans un plan qui est décrit par une tangente à la surface périphérique d'un diamètre de noyau (DK), ou qui est situé plus bas que ce plan, la base respective (G) du ou des évidements (6) étant située dans un plan qui est plus bas d'une profondeur (T) de jusqu'à 0,3 mm, en particulier de 0,1 mm, par rapport à la tangente à la surface périphérique du diamètre de noyau (DK) du filetage (3).

15. Pièce filetée (1) selon l'une quelconque des revendications 1 à 14,
**caractérisée en ce qu'**une pièce de bride (8) de préférence élargie radialement, particulièrement préférablement réalisée sous forme de rondelle, est réalisée au niveau du corps de base (2), en particulier à l'extrémité du côté opposé au filetage (3), laquelle présente notamment un contour extérieur (9) polygonal, en particulier hexagonal, pour l'engagement manuel ou pour l'engagement d'un outil de vissage, les arêtes de la pièce de bride (8) présentant de préférence à chaque fois un biseautage de jusqu'à 30°, en particulier de 10°, et particulièrement préférablement le corps de base (2) présentant dans la pièce de bride (8) un évidement de matériau (12) à partir du côté frontal.

16. Procédé de fabrication d'une pièce filetée (1) selon l'une quelconque des revendications 1 à 15, qui présente un corps de base (2) cylindrique creux (2) avec un canal interne (4) qui est entouré par une paroi (5) du corps de base (2), qui présente un filetage (3), le corps de base (2) étant fabriqué par injection radiale d'une masse polymère plastifiée contenant des fibres dans une cavité d'un outil de moulage par au moins une ouverture d'injection de l'outil de moulage et par démoulage subséquent hors de l'outil de moulage après rigidification de la masse polymère, une carotte étant ensuite enlevée de telle sorte que le corps de base (2) présente au moins une zone d'injection (A),
**caractérisé en ce que** dans une région du filetage (3) qui est à chaque fois opposée, de manière séparée par la paroi (5) du corps de base (2), à la région de la zone d'injection (A), est créé un évidement (6) interrompant le filetage, par insertion d'au moins un noyau dans l'outil de moulage utilisé pour le moulage par injection de la pièce filetée (1).

17. Procédé selon la revendication 16,
**caractérisé en ce que** le noyau ou plusieurs noyaux sont disposés de telle sorte qu'aucune contre-dépouille ne se produise dans la géométrie du corps de base (2) de la pièce filetée (1).
